# EUROPEAN PATENT APPLICATION

(11) **EP 4 075 209 A1**
(43) Date of publication of application: **19.10.2022**
(21) Application number: 21168372.7
(22) Date of filing: 14.04.2021
(51) Int. Cl.: G05B 13/02, C08J 9/00

(54) **ADJUSTING FOAM PRODUCTION PARAMETER, DETERMINING HARDNESS CONVERSION RELATIONSHIP, DEVICE FOR FOAM PRODUCTION AND MEDIUM**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a method for adjusting parameters for foam production, determining hardness conversion relationship, a device for foam production and a medium. The method for adjusting parameters for production comprises the following steps: measuring the cut surface hardness information of the foam on the conveyor of the foam production line; determining the predicted hardness information of the foam after curing based on a conversion relationship according to the cut surface hardness information, the conversion relationship being formed according to the historical data of the cut surface hardness information and the cured hardness information of the foam; and adjusting the production parameters of the foam according to the predicted hardness information. By means of the method, the hardness of the foam on the production line after curing may be predicted in real time or quasi real time, and the hardness may be adjusted adaptively.

## Description

### PRODUCTION AND MEDIUM

### Technical Field

The application relates to the field of foam processing, and particularly, to a method and system for adjusting parameters for foam production, a method for determining a conversion relationship of the hardness information of foam, a neural network for determining foam hardness information, a device for foam production and a computer readable storage medium.

### Background Art

Common flexible polyurethane (PUR) foam manufacturing method include a large bulk foam process by which long, continuous flexible polyurethane bulk foam may be continuously or discontinuously produced. In a continuous process, the required raw materials are delivered to the mixing head by a precision pump (e.g., a piston pump, gear pump); the raw materials optionally include a polyol, isocyanate, water, and/or auxiliary foaming agent, catalyst, stabilizer, and other additives. The raw materials are then mixed with a mechanical stirrer and poured on the bottom paper; and the conveyer conveys the bottom paper through the exhaust passage. Meanwhile, the reaction mixture expands to the desired size, and the resulting foam blocks will then be cut into desired shapes.

Since side pressure is created immediately after the foam foams and expands, the side is also often designed as a mobile conveyor. The process may continuously produce the foam blocks by partially inhibiting the initial ascending process.

### SUMMARY

The embodiments of the invention provide a method and system for adjusting parameter for foam production, a method for determining a conversion relationship of the hardness information of foam, a neural network for determining foam hardness information, a device for foam production and a computer readable storage medium, to predict the hardness of the foam on the production line after curing in real time; and to further adjust the hardness of the foam on the production line after curing.

According to one aspect of the present application, there is provided a method for adjusting parameters for foam production, comprising: measuring the cut surface hardness information of the foam on the conveyor of the foam production line; determining the predicted hardness information of the foam after curing based on a conversion relationship according to the cut surface hardness information, the conversion relationship being formed according to the historical data of the cut surface hardness information and the cured hardness information of the foam; and adjusting the production parameters of the foam according to the predicted hardness information.

In some embodiments of the present application, optionally, the cut surface hardness information, the predicted hardness information, and the cured hardness information comprise: indentation hardness, compression hardness.

In some embodiments of the present application, optionally, the production parameters comprise: formula parameters, process parameters.

In some embodiments of the present application, optionally, the formula parameters comprise a ratio of raw materials, the process parameters comprise: feeding temperature, fall plate angle, conveyor speed.

In some embodiments of the present application, optionally, the conversion relationship is formed according to a machine learning algorithm or a neural network algorithm.

According to another aspect of the present application, there is provided a method for determining a conversion relationship of the hardness information of foam, comprising: measuring the cut surface hardness information of at least one foam sample on the conveyor of the foam production line; measuring the cured hardness information of the foam sample after curing; and forming the conversion relationship according to the cut surface hardness information and the cured hardness information, the conversion relationship being used to determine the predicted hardness information of the foam after curing according to the cut surface hardness information of the foam on the conveyor of the foam production line.

In some embodiments of the present application, optionally, the cut surface hardness information is formed according to at least one position of at least one cut surface of the foam sample, the cured hardness information is formed according to at least one position of the foam sample after curing.

In some embodiments of the present application, optionally, at least part of the positions for measuring the cut surface hardness information are close to or the same as those for measuring the cured hardness information.

In some embodiments of the present application, optionally, the cut surface hardness information, the predicted hardness information, and the cured hardness information comprise: indentation hardness, compression hardness.

In some embodiments of the present application, optionally, the method further comprising: using a machine learning algorithm or a neural network algorithm to form the conversion relationship with the cut surface hardness information of the foam sample as input, and with the cured hardness information of the foam sample as output.

According to another aspect of the present application, there is provided a neural network for determining foam hardness information, wherein the neural network is trained with the cut surface hardness information of at least one foam sample on the conveyor of the foam production line as input, and with the cured hardness information of the foam sample after curing as target output.

According to another aspect of the present application, there is provided a system for adjusting parameters for foam production, comprising: one or more sensors configured to measure the cut surface hardness information of the foam on the conveyor of the foam production line; a calculation unit configured to determine the predicted hardness information of the foam after curing based on a conversion relationship according to the cut surface hardness information, wherein the conversion relationship is formed according to the historical data of the cut surface hardness information and the cured hardness information of the foam; and a sending unit configured to send the predicted hardness information, wherein the predicted hardness information is for adjusting the production parameters of the foam.

In some embodiments of the present application, optionally, the cut surface hardness information, the predicted hardness information, and the cured hardness information comprise: indentation hardness, compression hardness.

In some embodiments of the present application, optionally, the conversion relationship is formed according to a machine learning algorithm or a neural network algorithm.

In some embodiments of the present application, optionally, the calculation unit comprises the neural network described above.

In some embodiments of the present application, optionally, the system comprises at least 3 sensors.

In some embodiments of the present application, optionally, each sensor is ≥10 cm from each side of the foam rectangle.

In some embodiments of the present application, optionally, each sensor is ≥20 cm from each side of the foam rectangle.

In some embodiments of the present application, optionally, the sensor(s) is (are) configured to measure perpendicularly to the cut surface of the foam.

According to another aspect of the present application, there is provided a device for foam production, comprising any of the systems as described above.

In some embodiments of the present application, optionally, the device comprising: a receiving unit configured to receive the predicted hardness information; and an adjustment unit configured to adjust parameters of the device according to the predicted hardness information.

In some embodiments of the present application, optionally, the parameters comprise: formula parameters, process parameters.

In some embodiments of the present application, optionally, the formula parameters comprise a ratio of raw materials, the process parameters comprise: feeding temperature, fall plate angle, conveyor speed.

According to another aspect of the present application, there is provided a computer-readable storage medium storing instructions that, upon execution by a processor, cause the processor to perform any of the methods as described above.

### Brief Description of Drawings

The above and other objects and advantages of the present application will become more complete and clear from the following detailed description taken in conjunction with the drawings, wherein like or similar elements are designated by like numerals.
FIG. 1 illustrates a method for adjusting parameters for foam production according to one embodiment of the present application.
FIG. 2 illustrates a method for determining a conversion relationship of the hardness information of foam according to one embodiment of the present application.
FIG. 3 illustrates a system for adjusting parameters for foam production according to one embodiment of the present application.
FIG. 4 illustrates a device for foam production according to one embodiment of the present application.
FIG. 5 illustrates a device for foam production according to one embodiment of the present application.
FIG. 6 illustrates sensors according to one embodiment of the present application.
FIG. 7 illustrates a device for foam production according to one embodiment of the present application.

### Detailed Description

For the sake of brevity and illustrative purposes, the principles of the present application are described herein primarily with reference to exemplary embodiments thereof. However, those skilled in the art will readily recognize that the same principles are equally applicable to all types of methods and systems for adjusting parameters for foam production, the methods for determining a conversion relationship of the hardness information of foam, the neural networks for determining foam hardness information, the devices for foam production, and the computer readable storage media, and that these same or similar principles may be implemented therein without departing from the true spirit and scope of the present application.

Hardness is one of the most important quality indexes for flexible foams, and thus the hardness must be within a specified range to meet quality specification requirements. Otherwise, the foam will be degraded, and even deemed as waste in extreme cases. The limitation on hardness measurement of the device for polyurethane bulk foam production according to the prior art is that the measurement may only take place after about 24 hours of solidifying (also referred to as curing in this application) in the laboratory. Therefore, there has been no way to measure the hardness of the foam in the manufacturing process well to prevent the production of foam with unqualified hardness. Some embodiments of the present invention provide a mechanism for acquiring hardness information of foam on a production line and may further direct foaming parameter settings. Through the mechanism, real-time quality control may be achieved.

Although the embodiments of the present application are expanded with polyurethane bulk foam, the underlying principles of the invention are also applicable to other foams with production method similar to those of existing polyurethane foam. Some examples of the present application do not require that the cut surfaces be rectangular, while others require a rectangular cut surface.

The various "information" in this application may be specific values or may be stages formed according to these values (e.g., similar values are grouped into the same stage), thus reducing the complexity of processing.

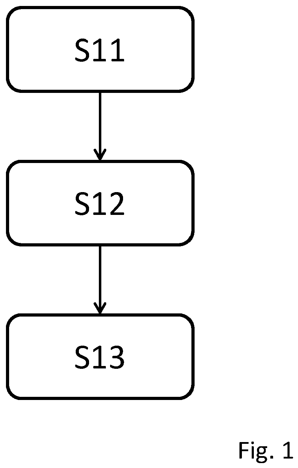

According to one aspect of the present application, there is provided a method for adjusting parameters for foam (e.g., polyurethane bulk foam) production. As shown in FIG. 1, the method for adjusting production parameter includes the following steps: In step S11, measuring the cut surface hardness information of the foam on the conveyor of the foam production line. In step S12, determining the predicted hardness information of the foam after curing based on a conversion relationship according to the cut surface hardness information, wherein, the conversion relationship is formed according to the historical data of the cut surface hardness information and the cured hardness information of the foam. In step S13, adjusting the production parameters of the foam according to the predicted hardness information.

The method for adjusting production parameter of the present application measures the cut surface hardness information of the foam on the conveyor of the foam production line in step S11. In step S11, the hardness of the cut surface of, for example, a newly severed foam is first measured. For example, specifically, a sensor may be utilized to measure various hardness indexes of the foam to form the cut surface hardness information.

In some examples of the present application, the cut surface hardness information may be calculated according to at least one position of at least one cut surface of the foam. The severed foam sample would include two cut surfaces. In some examples of the present application, it is preferred to measure the cut surface at the rear side in the direction for the conveyor to going forward. The hardness information may be measured in several positions of the cut surface before and after curing so as to form the cut surface hardness information. For example, for convenience of measuring, what is measured herein is the hardness of the foam that remains on the conveyor after being severed (or, after cutting), rather than the hardness of the foam dropped after cutting. Second, the "newly" severed in the present application generally refers to measuring at the constant of severing; thereby ensuring that regular delivery of the conveyor is not affected. In other examples, subject to hardware conditions limitation and/or reserving a certain period of solidifying time so that the foam structure is more stable, the hardness of the foam may also be measured after severing for slightly a period of time (e.g., 0.5 seconds, 2 seconds). In some examples, the hardness information of the foam may be measured using a mechanical measurement device such as a pressure sensor, and the like. Although specific ways of measuring (e.g., number of sensors, placement positions, etc.) are not limited here, the measurement of the cut surface hardness information of the severed foam on the production line should be performed under the same conditions as the measurement of the cut surface hardness information of the foam in the historical data described below. Typical examples of pressure sensors include LCMKD series of ultra-small industrial weighing sensors manufactured by OMEGA, for example.

The method for adjusting production parameters of the present application determines the predicted hardness information of the foam after curing based on the conversion relationship according to the cut surface hardness information in step S12, wherein, the conversion relationship is formed according to the historical data of the cut surface hardness information and the cured hardness information of the foam. Direct measurement of cut surface hardness information is described above, but the hardness of the foam after curing (solidifying) is not consistent with the measured cut surface hardness. In the experiment, it is found that there exists corresponding relationship between the cut surface hardness information and the predicted hardness information after curing, so that the predicted hardness information after curing may be derived according to the cut surface hardness information of the foam. The conversion relationship between the cut surface hardness information and the predicted hardness information may be formed according to historical data, such historical data including data acquired from experiment specifically for studying conversion relationships, the concept of "historical" is relative to the current time of determining the predicted hardness information of the foam after curing. Note that, in some examples, the conversion relationship may be the form of a concrete mathematical expression, for example, it may be a translation table, a mapping function, or the like. In other examples, the conversion relationship may be a mathematical abstraction that is not or not readily expressed in a specific mathematical form. The conversion relationship of the present invention refers to a variety of feasible forms with "the cut surface hardness information" as input parameter and "the predicted hardness information" as output result.

The method for adjusting production parameters of the present application adjusts production parameters of the foam according to the predicted hardness information in step S13. It is recited above that the predicted hardness information may be determined in step S12, and the parameters of the device for foam production may be adjusted according to the difference between the predicted hardness information and the desired hardness information, so that the predicted hardness information is close to or even equal to the desired hardness information. For example, if the predicted hardness information fails to reach the hardness required for machining, the parameters of the device for foam production may be adjusted in this case to increase the hardness of the foam on the production line.

There are various interference factors in the actual production process, even if the foam produced at some point meets the desired hardness information, the interference factors may also cause the foam that is subsequently produced not to meet the requirements due to the accumulation of errors. Steps S11 through S13 may be continuously repeated in the actual production, so that the hardness of the produced foam may be dynamically verified and the parameters of the device for foam production may be dynamically adjusted to eliminate the accumulated errors.

In some embodiments of the present application, the hardness information described above refers to various indexes that are capable of assessing hardness, for example, hardness information (including cut surface hardness information, predicted hardness information, and cured hardness information) may be indentation hardness (e.g., IFD/ILD, Indentation Load Force Deflection), compression hardness (e.g., CFD, Compression Force Deflection), and the like. In some examples, it is preferred to perform measurements, predictions, and formation of conversion relationships with the same hardness information. For example, if the cut surface indentation hardness of the severed foam is measured, then the predicted indentation hardness of the foam after curing is predicted, and the conversion relationship the prediction based on is formed according to the cut surface indentation hardness and the cured indentation hardness in the historical data. In other examples, the possibilities of measurement and prediction with different hardness information are not precluded. For example, if the cut surface compression hardness of the severed foam is measured, while the predicted indentation hardness of the foam after curing is predicted, at which point the conversion relationship the prediction based on is formed according to the cut surface compression hardness and the cured indentation hardness in the historical data. That is, the protection scope of the claims of this application extends to the situations of measurements and predictions with different metrics.

In some embodiments of the present application, the adjustable production parameters of the foam include formula parameters, process parameters. Wherein, the formula parameters include a ratio of raw materials, and the process parameters include one or more of: feeding temperature, fall plate angle, conveyor speed. Controlling the ratio of raw materials, the feeding temperature, the fall plate angle and the conveyor speed of the production line may respectively adjust the hardness of the produced foam. While in some cases, various parameters may be adjusted at the same time to ensure that the produced foam can reaches the desired hardness under the limit of physical conditions. In the foaming process, the side surfaces of the foam body rise and the side plates generate relative displacement when the foam rises, so that relatively large friction and turbulence are caused, and the foam body is unstable and prone to defects. By adjusting the angle of the falling plate, the displacement amplitude between the foam body and the side plate may be controlled and reduced at any time, and the generation of foaming defects is reduced while the shape of the foam body is under control.

In some embodiments of the present application, the conversion relationship is formed according to a machine learning algorithm (e.g., a linear regression) or a neural network algorithm. The conversion relationship may, for example, be attached to a neural network. Although the conversion relationship is dependent upon the structure of the neural network, those skilled in the art may not focus on the structure of the neural network when practicing the invention, nor to how to train the neural network and what morphology the trained neural network is.

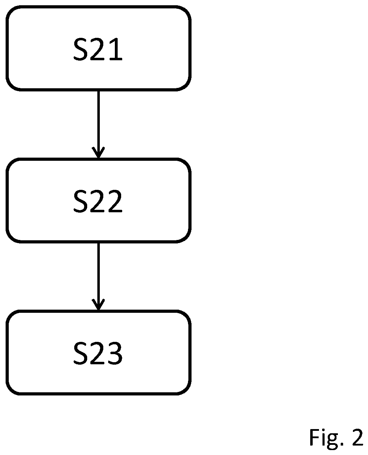

It is described above to determine the predicted hardness information of the foam after curing based on a conversion relationship. In accordance with another aspect of the present application, a method for determining a conversion relationship of the hardness information of foam (e.g., polyurethane bulk foam) is provided. As shown in FIG. 2, the method for determining a conversion relationship of the hardness information of foam includes the following steps: In step S21, the cut surface hardness information of at least one foam sample on the conveyor of the foam production line is measured. In step S22, the cured hardness information of the foam sample after curing is measured. In step S23, a conversion relationship is formed according to the cut surface hardness information and the cured hardness information. The conversion relationship is used for determining predicted hardness information of the foam after curing according to the cut surface hardness information of the foam on the conveyor of the foam production line.

According to the method for determining a conversion relationship of the hardness information of foam, the cut surface hardness information of at least one foam sample on the conveyor of the foam production line is measured in step S21. It is described above that a conversion relationship may be formed from the historical data of the cut surface hardness information and the cured hardness information of the foam. In some examples, the conversion relationship may be determined by experiment, while the subject of the experiment is referred to as a foam sample. It is noted that the foam samples may also be finished foams of the actual production process that are not manufactured for the purposes of studying the conversion relationship, but which may be used to study the conversion relationship. The finished foams may be treated as foam samples during study.

The at least one foam sample may not be continuously produced, for example, the foam samples may be produced on different production days, which may avoid interference caused by occasional errors in the device for foam production to the study of conversion relationship. The method for measuring the cut surface hardness information of the foam sample may be referred to above with reference to the method for measuring the cut surface hardness information of the foam, and is not repeated herein.

According to the method for determining a conversion relationship of the hardness information of foam, the cured hardness information of the foam sample after curing is measured in step S22. After the cut surface hardness information of the at least one sample is measured according to step S21, the samples may be moved to, for example, a laboratory for about 12 hours for solidifying, and then the cured hardness information of the foam sample after curing is to be measured. The foam after 12 hours of solidifying in the laboratory can be considered to be consistent with the factory foam in hardness.

In some examples of the present application, the cut surface hardness information may be calculated from at least one position of at least one cut surface of the foam sample. On the other hand, the cured hardness information may be calculated according to at least one position of the foam sample after curing. The severed foam sample would include two cut surfaces. In some examples of the present application, it is preferred to measure the cut surface at the rear side in the direction for the conveyor to going forward. The hardness information may be measured in several positions of the cut surface before and after curing so as to form the cut surface hardness information and cured hardness information respectively.

In some examples of the present application, at least part of the positions for measuring the cut surface hardness information are close to or the same as those for measuring the cured hardness information, wherein "close" may be defined as positions are not apart more than a set threshold (e.g., 2 cm).

According to the method for determining a conversion relationship of the hardness information of foam, a conversion relationship is formed according to the cut surface hardness information and the cured hardness information in step S23, and the conversion relationship is used for determining the predicted hardness information of the foam after curing according to the cut surface hardness information of the foam on the conveyor of the foam production line. The correlation between the cut surface hardness information and the cured hardness information of the foam sample may form a conversion relationship. In some examples, the conversion relationship may be the form of a concrete mathematical expression, for example, it may be may be a translation table, a mapping function, or the like. In other examples, the conversion relationship may be a mathematical abstraction that is not or not readily expressed in a specific mathematical form. The conversion relationship of the present invention refers to a variety of feasible forms with "the cut surface hardness information" as input parameter and "the predicted hardness information" as output result.

Due to the fact that the changes between the cut surface hardness information and the cured hardness information of the foams actually put into production and the foam samples are consistent, thus the predicted hardness information of the severed foam on the conveyor of the foam production line after curing may be deduced from the conversion relationship formed by the foam samples. The above process may be expressed mathematically as:
f: H_{fresh}. Sample → H_{Cured}. Sample
H_{Cured}.Product = f(H_{fresh}.Product)

Where f represents the conversion relationship, H_{fresh}.Sample represents the cut surface hardness information of the foam sample, and H_{Cured}.Sample represents the cured hardness information of the foam sample; H_{fresh}.Product represents the cut surface hardness information of the produced foam, and H_{Cured}.Product represents the predicted hardness information of the produced foam after curing. The predicted hardness information (H_{Cured}.Product) of the produced foam after curing may be determined by the above mathematical relationship.

In some embodiments of the present application, the cut surface hardness information, the predicted hardness information, and the cured hardness information may be indentation hardness, compression hardness, and the like. In some examples, it is preferred to form the conversion relationship with the same hardness information. For example, if the conversion relationship the prediction based on is formed according to the cut surface indentation hardness and the cured indentation hardness of the foam sample, then the cut surface indentation hardness of the severed foam can be measured, and the predicted indentation hardness of the foam after curing can be predicted. In other examples, the possibilities of forming the conversion relationship with different hardness information are not precluded. For example, if the conversion relationship the prediction based on is formed according to the cut surface compression hardness and the cured indentation hardness of the foam sample, then the cut surface compression hardness of the severed foam can be measured, and the predicted indentation hardness of the foam after curing can be predicted.

In some embodiments of the present application, the method for determining a conversion relationship of the hardness information of foam includes using a machine learning algorithm (e.g., a linear regression) or a neural network algorithm to form the conversion relationship with the cut surface hardness information of the foam sample as input, and with the cured hardness information of the foam sample as output. In the case that training neural network with the cut surface hardness information of the foam sample as input, and with the cured hardness information of the foam sample as output, the conversion relationship will be attached to the neural network. Although the conversion relationship is dependent upon the structure of the neural network, those skilled in the art may not focus on the structure of the neural network when practicing the invention, nor to how to train the neural network and what morphology the trained neural network is.

According to another aspect of the present application, there is provided a neural network for determining hardness information for foam (e.g., polyurethane bulk foam), wherein the neural network is trained with the cut surface hardness information of at least one foam sample on the conveyor of the foam production line as input, and with the cured hardness information of the foam sample after curing as target output. At this case, the conversion relationship may be attached to the neural network. The specific construction of the neural network is not limited here, as long as it can determine the predicted hardness information after training.

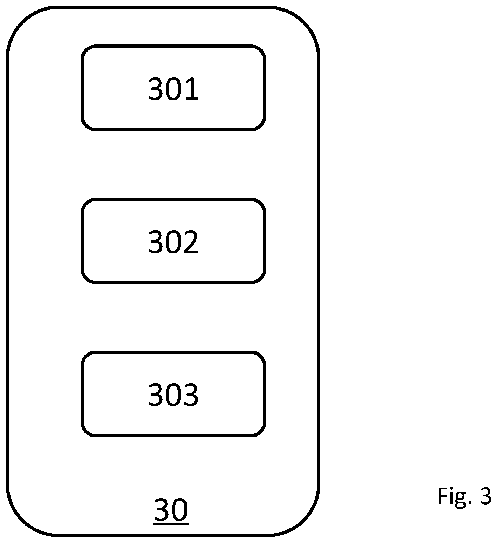

According to another aspect of the present application, there is provided a foam (e.g., polyurethane bulk foam) production parameter adjusting system. As shown in FIG. 3, production parameter adjusting system 30 includes one or more sensors 301, a calculation unit 302, and a sending unit 303. Wherein, one or more sensors 301 are configured to measure the cut surface hardness information of the foam on the conveyor of the foam production line. For example, various hardness indexes of the foam may be measured by the sensor(s) 301 to form the cut surface hardness information.

In some examples of the present application, the cut surface hardness information may be calculated according to at least one position of at least one cut surface of the foam. The severed foam sample would include two cut surfaces. In some examples of the present application, it is preferred to measure the cut surface at the rear side in the direction for the conveyor to going forward. The hardness information may be measured in several positions of the cut surface before and after curing so as to form the cut surface hardness information. For example, for convenience of the placement of the sensors 301, what is measured here is the hardness of the foam that remains on the conveyor after being severed, rather than the hardness of the foam dropped after cutting. Second, the "newly" severed in the present application generally refers to measuring at the constant of severing; thereby ensuring that regular delivery of the conveyor is not affected. In other examples, subject to hardware conditions limitation and/or reserving a certain period of solidifying time so that the foam structure is more stable, the hardness of the foam may also be measured after severing for slightly a period of time (e.g., 0.5 seconds, 2 seconds). In some examples, sensors 301 may be embodied as mechanical measurement devices such as pressure sensors. Although specific ways of measuring (e.g., number of sensors 301, placement positions, etc.) are not limited here, the measurement of the cut surface hardness information of the severed foam on the production line should be performed under the same conditions (e.g., the placement of the sensors 301 remains the same) as the measurement of the cut surface hardness information of the foam in the historical data.

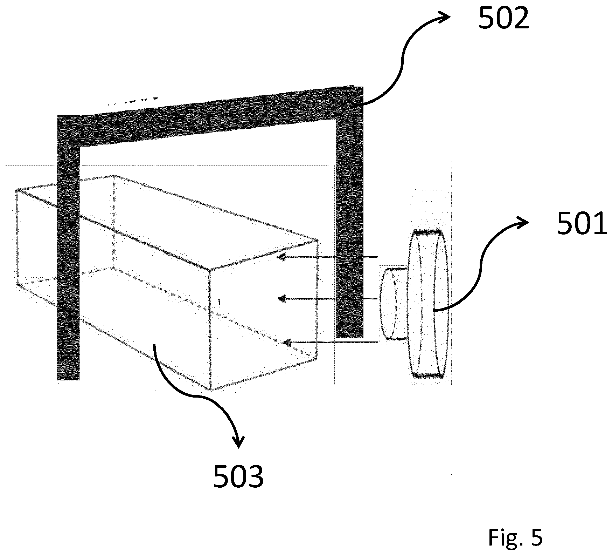

Referring to FIG. 5, the cutting device 502 is provided on an existing production line, and the foam 503 is cut by the cutting device 502 after going through, while the sensor 501 may measure the cut surface hardness information of such as the newly severed foam on the conveyor of the foam production line.

The calculation unit 302 is configured to determine the predicted hardness information of the foam after curing based on a conversion relationship according to the cut surface hardness information, wherein the conversion relationship is formed according to the historical data of the cut surface hardness information and the cured hardness information of the foam. Direct measurement of cut surface hardness information by the sensors 301 is described above, but the hardness of the foam after curing (solidifying) is not consistent with the measured cut surface hardness. However, the predicted hardness information of the foam after curing may be deduced from its cut surface hardness information. The conversion relationship between the cut surface hardness information and the predicted hardness information may be formed according to historical data, such historical data including data acquired from experiment specifically for studying conversion relationships, the concept of "historical" is relative to the current time of determining the predicted hardness information of the foam after curing. Note that, in some examples, the conversion relationship may be the form of a concrete mathematical expression, for example, it may be a translation table, a mapping function, or the like. In these cases, the calculation unit 302 may determine predicted hardness information of the foam after curing according to a translation table, a mapping function, or the like. In other examples, the conversion relationship may be a mathematical abstraction that is not or readily expressed in a specific mathematical form. In these cases, the calculation unit 302 may determine predicted hardness information of the foam after curing according to these mathematical abstractions regardless what forms the mathematical abstractions are. The conversion relationship of the present invention refers to a variety of feasible forms with "the cut surface hardness information" as input parameter and "the predicted hardness information" as output result.

The sending unit 303 is configured to send the predicted hardness information. The calculation unit 302 described above may determine predicted hardness information. The parameters of the device for foam production may be adjusted according to the difference between the predicted hardness information and the desired hardness information, so that the predicted hardness information is close to or even equal to the desired hardness information. For example, if the predicted hardness information fails to reach the hardness required for machining, the parameters of the device for foam production may be adjusted in this case to increase the hardness of the foam on the production line. The sending unit 303 of the present application may send the predicted hardness information to the device for foam production so that the device for foam production may adjust the parameters therein according to the predicted hardness information.

There are various interference factors in the actual production process, even if the foam produced at some point meets the desired hardness information, the interference factors may also cause the foam that is subsequently produced not to meet the requirements due to the accumulation of errors. One or more sensors 301, the calculation unit 302, and the sending unit 303 may work continuously in actual production, so that the hardness of the produced foam may be dynamically verified and the predicted hardness information may be transmitted in real time/quasi real time.

In some embodiments of the present application, the hardness information described above refers to various indexes that are capable of assessing hardness, for example, hardness information (including cut surface hardness information, predicted hardness information, and cured hardness information) may be indentation hardness, compression hardness. In some examples, it is preferred to perform measurements, predictions, and formation of conversion relationships with the same hardness information. For example, if the sensor(s) 301 measure(s) the cut surface indentation hardness of the severed foam, then the calculation unit 302 predicts the predicted indentation hardness of the foam after curing, and the conversion relationship on which the calculation unit 302 is based is formed according to the cut surface indentation hardness and the cured indentation hardness in the historical data. In other examples, the possibilities of measurement and prediction with different hardness information are not precluded. For example, if the sensor(s) 301 measure(s) the cut surface compression hardness of the severed foam, while the calculation unit 302 predicts the predicted indentation hardness of the foam after curing, at which point the conversion relationship the prediction based on is formed according to the cut surface compression hardness and the cured indentation hardness in the historical data.

In some embodiments of the present application, the conversion relationship is formed according to a machine learning algorithm (e.g., a linear regression) or a neural network algorithm. The conversion relationship may, for example, be attached to a neural network. Although the conversion relationship is dependent upon the structure of the neural network, those skilled in the art may not focus on the structure of the neural network when practicing the invention, nor to how to train the neural network and what morphology the trained neural network is. In some embodiments of the present application, the calculation unit 302 may keep such as the neural network to which the conversion relationship is attached.

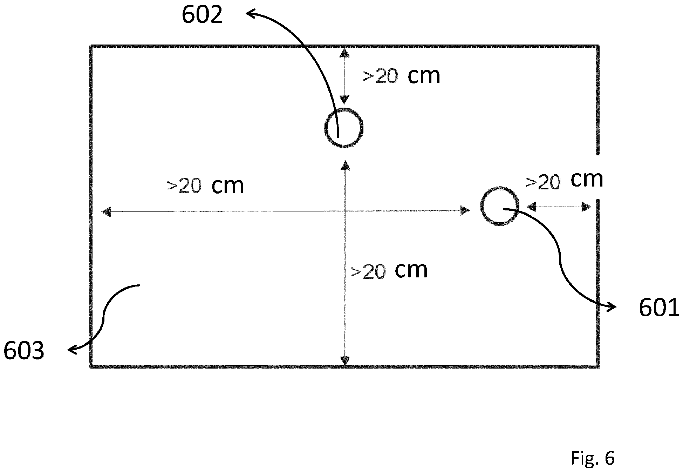

In some embodiments of the present application, specifically, the foam may be polyurethane bulk foam. As shown in FIG. 6, production parameter adjusting system 30 may include sensors 601 and 602, and each of the sensors 601 and 602 is greater than 20 cm from each side of the rectangular foam 603. In some examples, the production parameter adjusting system 30 includes 3 sensors, and each sensor is greater than 10 cm from each side of the rectangular foam, preferably greater than 20 cm. In general, the size of each dimension of the foam is greater than 40 cm, and if the edge hardness of the foam to be detected is likely to be large due to deformation, the measured values would be not representative. In the experiment, we found it better to arrange 3 sensors, which may be balanced between measurement accuracy and cost. The relatively accurate cut surface hardness information may be determined from the measured values of the 3 sensors, for example, the average of the measured values of the 3 sensors may be taken as the cut surface hardness information. In addition, the apparently unreasonable measured values of the 3 sensors may be precluded according to the measured values, and the cut surface hardness information is determined according to the remaining reasonable values. In some embodiments of the present application, the distance of each sensor to the foam's rectangular center may be set to be equal, and the distances between the sensors are equal too. As such, the sensors 301 will be uniformly distributed with respect to the rectangular cut surface, and thus more generic cut surface hardness information may be measured. If the sensors 301 are arranged in a centralized fashion, the hardness information of the same area would be measured: when there is a local machining flaw in this area, the measured value will clearly not represent the hardness of the cut surface.

In some embodiments of the present application, the sensor(s) 301 is (are) configured to measure perpendicularly to the cut surface of the foam. It is described above that the measurement of the cut surface hardness information of the severed foam on the production line should be performed under the same conditions (e.g., the placement of the sensors 301 remains the same) as the measurement of the cut surface hardness information of the foam in the historical data as described below. Specifically, the detection direction of the sensor(s) 301 may both be perpendicular to the cut surface of the foam.

The foam production parameter adjusting system 30 of the present application may be used for such as adding to the existing production lines, so as to update the existing production lines.

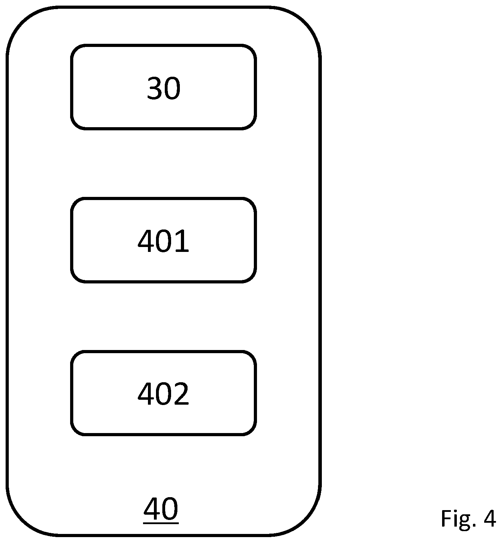

According to another aspect of the present application, there is provided a device for foam (e.g., polyurethane bulk foam) production. As shown in FIG. 4, the device for foam production 40 includes any of the foam production parameter adjusting systems 30 as described above. As such, the device for foam production 40 may adjust the production line parameters according to the predicted hardness information reported by its foam production parameter adjusting system 30, thereby achieving the hardness control of the foam on the production line.

In some embodiments of the present application, the device for foam production 40 further includes a receiving unit 401 and an adjustment unit 402. The receiving unit 401 is configured to receive the predicted hardness information, and the adjustment unit 402 is configured to adjust parameters of the device for foam production 40 according to the predicted hardness information. The receiving unit 401 may receive the predicted hardness information reported by the production parameter adjusting system 30 and send it to the adjustment unit 402, which adjusts the parameters of the device for foam production 40 according to the predicted hardness information. Specifically, the adjustment unit 402 may send an instruction to adjust parameters of the device for foam production 40 based on the difference between the predicted hardness information and the desired hardness information, which is destined for some of the execution components (not shown) of the device for foam production 40. In this way, the predicted hardness information is brought close to or even equal to the desired hardness information. For example, if the predicted hardness information fails to achieve the desired hardness for machining, the adjustment unit 402 may send instructions to adjust the parameters of the device for foam production 40 so as to increase the hardness of the foam on the production line.

In some embodiments of the present application, the adjustable production parameters of the foam include formula parameters, process parameters. Wherein, the formula parameters include a ratio of raw materials, and the process parameters include one or more of: feeding temperature, fall plate angle, conveyor speed. For example, the adjustment unit 402 may send an instruction to the precision pump (e.g., a piston pump, gear pump) to adjust the ratio of raw materials, or may send an instruction to the conveyor motor to adjust the speed.

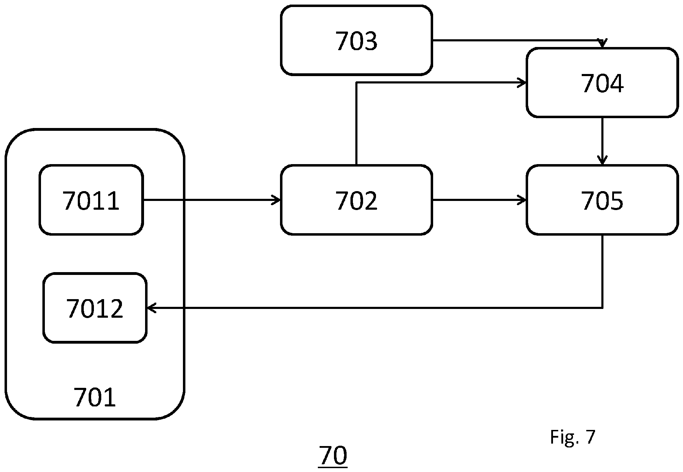

More specifically, please refer further to FIG. 7, the device for foam production 70 includes an existing production line 701, and a sensor 7011 and an adjusting unit 7012 are added to the existing production line. In addition, the device for foam production 70 also includes a server 702, a memory 703, a database 704, and a processing unit 705. The sensor 7011 is configured to measure the cut surface hardness information of such as the newly severed foam on the conveyor of the foam production line and send this information to the server 702. The severed foam can be put into a laboratory environment for solidifying and its cured hardness information can be recorded in the memory 703 after curing. The database 704 may gather the cut surface hardness information of the foam from the server 702 and the cured hardness information from the memory 703, and accumulate to form a history database. The processing unit 705 may train the algorithm according to the corresponding cut surface hardness information and the cured hardness information stored in the database 704, and the trained algorithm can be used for predicting the predicted hardness information. The processing unit 705 also receives the cut surface hardness information of the foam from the server 702 and may determine the predicted hardness information based on the cut surface hardness information according to the algorithm. The predicted hardness information may be uploaded to an adjusting unit 7012, which may send instructions to adjust the parameters of the device for foam production 70 based on the difference between the predicted hardness information and the desired hardness information, which is destined for some of the execution components (not shown) of the device for foam production 70. In this way, the predicted hardness information is brought close to or even equal to the desired hardness information.

According to another aspect of the present application, there is provided a computer-readable storage medium having stored therein instructions that, when executed by a processor, cause the processor to perform any of the methods described above. Computer-readable medium, which are referred to in this application, include various types of computer storage medium, and may be any available medium that may be accessed by a general purpose or special purpose computer. By way of example, a computer-readable medium may include RAM, ROM, EPROM, E²PROM, register, hard disk, removable disk, CD-ROM, or other optical disc storage, magnetic disk storage, or other magnetic storage device, or any other transitory or non-transitory medium that may be used to carry or store desired program code units in the form of instructions or data structures and that may be accessed by a general purpose or special purpose computer, or a general purpose or special purpose processor. As used herein, disks usually reproduce data magnetically, while discs reproduce data optically with lasers. Combinations of the above should also be included within the scope of computer-readable medium. An exemplary storage medium is coupled to the processor such that the processor may read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The above is merely a detailed description of the present application, but the scope of the present application is not limited thereto. Other possible variations or substitutions will occur to those skilled in the art in light of the scope of the technology disclosed herein, which are intended to be encompassed within the scope of the present application. The features of embodiments and implementations of the present application may also be combined with each other without conflict. The scope of the invention is best determined by reference to the appended claims.

## Claims

1. A method for adjusting parameters for foam production, comprising:
measuring the cut surface hardness information of the foam on the conveyor of the foam production line;
determining the predicted hardness information of the foam after curing based on a conversion relationship according to the cut surface hardness information, the conversion relationship being formed according to the historical data of the cut surface hardness information and the cured hardness information of the foam; and
adjusting the production parameters of the foam according to the predicted hardness information.

2. The method according to claim 1, wherein the cut surface hardness information, the predicted hardness information, and the cured hardness information comprise: indentation hardness, compression hardness.

3. The method according to claim 1, wherein the production parameters comprise: formula parameters, process parameters.

4. The method according to claim 3, wherein the formula parameters comprise a ratio of raw materials, wherein further the process parameters comprise: feeding temperature, fall plate angle, conveyor speed.

5. The method according to any one of claims 1-4, wherein the conversion relationship is formed according to a machine learning algorithm or a neural network algorithm.

6. The method according to any one of claims 1-5, wherein the conversion relationship of the hardness information of foam is formed by:
measuring the cut surface hardness information of at least one foam sample on the conveyor of the foam production line;
measuring the cured hardness information of the foam sample after curing; and
forming the conversion relationship according to the cut surface hardness information and the cured hardness information, the conversion relationship being used to determine the predicted hardness information of the foam after curing according to the cut surface hardness information of the foam on the conveyor of the foam production line,
the cut surface hardness information, the predicted hardness information, and the cured hardness information preferably comprising indentation hardness, compression hardness.

7. The method according to claim 6, the cut surface hardness information is formed according to at least one position of at least one cut surface of the foam sample, the cured hardness information is formed according to at least one position of the foam sample after curing.

8. The method according to claim 7, at least part of the positions for measuring the cut surface hardness information are close to or the same as those for measuring the cured hardness information.

9. The method according to any one of claims 6-8, further comprising: using a machine learning algorithm or a neural network algorithm to form the conversion relationship with the cut surface hardness information of the foam sample as input, and with the cured hardness information of the foam sample as output.

10. A neural network for determining foam hardness information, wherein the neural network is trained with the cut surface hardness information of at least one foam sample on the conveyor of the foam production line as input, and with the cured hardness information of the foam sample after curing as target output.

11. A system for adjusting parameters for foam production, comprising:
one or more, preferably at least 3, sensors configured to measure the cut surface hardness information of the foam on the conveyor of the foam production line;
a calculation unit configured to determine the predicted hardness information of the foam after curing based on a conversion relationship according to the cut surface hardness information, wherein the conversion relationship is formed according to the historical data of the cut surface hardness information and the cured hardness information of the foam; and
a sending unit configured to send the predicted hardness information, wherein the predicted hardness information is for adjusting the production parameters of the foam,
wherein the cut surface hardness information, the predicted hardness information, and the cured hardness information preferably comprise: indentation hardness, compression hardness.

12. The system according to claim 11, wherein the calculation unit comprises the neural network according to claim 10.

13. The system according to claim 11 or 12, wherein each sensor is ≥10 cm, preferably ≥20 cm, from each side of the foam rectangle, wherein preferably the sensor(s) is (are) configured to measure perpendicularly to the cut surface of the foam.

14. A device for foam production, comprising the system according to any one of claims 11-13, preferably comprising:
a receiving unit configured to receive the predicted hardness information; and
an adjustment unit configured to adjust parameters of the device according to the predicted hardness information, wherein the parameters preferably comprise: formula parameters, process parameters, wherein the formula parameters preferably comprise a ratio of raw materials, the process parameters comprise: feeding temperature, fall plate angle, conveyor speed.

15. A computer-readable storage medium storing instructions that, upon execution by a processor, cause the processor to perform the method according to any one of claims 1-9.
